# EUROPÄISCHE PATENTSCHRIFT

(11) **EP 1 506 133 B1**
(45) Veröffentlichungstag und Bekanntmachung des Hinweises auf die Patenterteilung: **14.09.2011**
(21) Anmeldenummer: 03752665.4
(22) Anmeldetag: 13.05.2003
(51) Int. Cl.: C01B 7/04

(54) **VERFAHREN ZUR HERSTELLUNG VON CHLOR AUS CHLORWASSERSTOFF**
METHOD FOR PRODUCING CHLORINE FROM HYDROGEN CHLORIDE
PROCEDE DE FABRICATION DE CHLORE A PARTIR DE GAZ CHLORHYDRIQUE

(30) Priorität: 15.05.2002 DE 10221802
(43) Veröffentlichungstag der Anmeldung: 16.02.2005
(73) Patentinhaber: BASF SE, 67056 Ludwigshafen (DE)
(72) Erfinder: WALSDORFF, Christian, 67059 Ludwigshafen (DE); FIENE, Martin, 67150 Niederkirchen (DE); WEBER, Markus, 67061 Ludwigshafen (DE); STRÖFER, Eckhard, 68163 Mannheim (DE); HARTH, Klaus, 67317 Altleiningen (DE)
(86) Internationale Anmeldenummer: PCT/EP2003/004970
(87) Internationale Veröffentlichungsnummer: WO 2003/097525

(56) Entgegenhaltungen:
- GB-A- 1 046 313
- US-A- 2 542 961
- US-A- 3 201 201
- US-A- 4 828 815
- US-A- 5 639 436

## Beschreibung

Die vorliegende Erfindung betrifft ein Verfahren zur kontinuierlichen Herstellung von Chlor durch Umsetzung von Chlorwasserstoff mit Sauerstoff in Gegenwart eines Heterogenkatalysators bei begrenztem Chlorwasserstoff-Umsatz.

Die katalytische Oxidation von Chlorwasserstoff zu Chlor, ist als Deacon-Prozess bekannt.

Aus der GB-A-1,046,313 sind Katalysatoren für den Deacon-Prozess bekannt, die eine Rutheniumverbindung auf einer Trägerverbindung enthalten. Es wird beschrieben, dass mit solchen Katalysatoren das thermodynamische Gleichgewicht der Reaktion bei relativ niedrigen Temperaturen erreicht werden kann. Es wird weiterhin die Herstellung von Chlor unter Verwendung von Luft als Sauerstoffquelle beschrieben, wobei das Reaktionsgemisch im einfachen Durchgang über den Katalysator geleitet und anschließend aufgearbeitet wird. Ein Nachteil dieses Verfahrens sind die im einfachen Durchgang maximal zu erzielenden relativ geringen Gesamtausbeuten an Chlor bezogen auf Chlorwasserstoff und die hohen Abgasströme bei Verwendung von Luft als Sauerstoffquelle, die auch eine Rückführung des nicht umgesetzten Sauerstoffs erschweren.

Aus der EP-A-233 773 ist ein Verfahren zur Herstellung von Chlor nach dem Deacon-Prozess unter Verwendung eines chromoxidhaltigen Katalysators bekannt. Bei diesem Verfahren wird im einfachen Durchgang nicht umgesetzter Chlorwasserstoff als verdünnte Salzsäure aufgenommen und aus dem Prozess ausgeschleust. Der im einfachen Durchgang nicht umgesetzte Sauerstoff wird nach Abtrennung eines Purge-Stroms in den Reaktor zurückgeführt. Ein Nachteil dieses Verfahrens ist der Anfall erheblicher Mengen an verdünnter Salzsäure, die für die Chlorproduktion verloren sind.

Aus der EP-A-1 099 666 ist ein Verfahren zur Herstellung von Chlor nach dem Deacon-Prozess bekannt, bei dem Chlorwasserstoff aus dem Produktgasstrom zunächst als wässrige Salzsäure abgetrennt und anschließend nach destillativer Abtrennung aus der Salzsäure wieder in den Reaktionsteil zurückgeführt wird. Durch eine geschickte Wahl der Destillationsbedingungen und Verwendung einer zweiten Destillationskolonne kann der Chlorwasserstoff sogar vollständig aus der Salzsäure zurückgewonnen werden, so dass praktisch überhaupt keine Salzsäure als Nebenprodukt anfällt.

Allerdings deaktivieren die Katalysatoren in den zuvor genannten Verfahren rasch, da diese bei hohen Umsätzen betrieben werden.

Der vorliegenden Erfindung lag daher die Aufgabe zugrunde, den zuvor genannten Nachteilen abzuhelfen.

Demgemäß wurde ein neues und verbessertes Verfahren zur kontinuierlichen Herstellung von Chlor durch Umsetzung von Chlorwasserstoff mit Sauerstoff in Gegenwart eines Heterogenkatalysators gefunden, welches dadurch gekennzeichnet ist, dass man den Umsatz von Chlorwasserstoff bei einfachem Reaktordurchgang auf 15 bis 90 % begrenzt.

Das erfindungsgemäße Verfahren kann wie folgt durchgeführt werden:
Das erfindungsgemäße Verfahren kann adiabat oder bevorzugt isotherm oder annähernd isotherm, diskontinuierlich, bevorzugt kontinuierlich als Fließ- oder Festbettverfahren, bevorzugt als Festbettverfahren, besonders bevorzugt in Rohrbündelreaktoren an Heterogenkatalysatoren bei Reaktortemperaturen von 180 bis 500°C, bevorzugt 200 bis 400°C, besonders bevorzugt 220 bis 350°C und einem Druck von 1 bis 20 bar, bevorzugt 1,1 bis 10 bar, besonders bevorzugt 1,2 bis 5 bar und insbesondere 1,5 bis 3 bar durchgeführt werden.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Reaktor zusammengeführt werden.

Eine bevorzugte Ausführungsform besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Steatit, Keramik, Glas, Graphit oder Edelstahl eingesetzt werden. Beim bevorzugten Einsatz von Katalysatorformkörpern sollte das Inertmaterial bevorzugt ähnliche äußeren Abmessungen haben.

Als Katalysatorformkörper eignen sich in der Regel beliebige Formen, bevorzugt Tabletten, Ringe, Zylinder, Sterne, Wagenräder oder Kugeln, besonders bevorzugt Ringe, Zylinder oder Sternstränge.

Als Heterogenkatalysatoren eignen sich gegebenenfalls dotierte Rutheniumkatalysatoren oder Kupferkatalysatoren auf Trägermaterialen, bevorzugt dotierte Rutheniumkatalysatoren. Als Trägermaterialen eignen sich beispielsweise Siliciumdioxid, Graphit, Titandioxid mit Rutil- oder Anatas-Struktur, Aluminiumoxid oder deren Gemische, bevorzugt Titandioxid, Aluminiumoxid oder deren Gemische, besonders bevorzugt γ-, δ- oder α-Aluminiumoxid oder deren Gemische.

Die Kupfer- und bevorzugt die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich Promotoren wie beispielsweise Alkali wie Lithium, Natrium, Kalium, Rubidium und Cäsium, bevorzugt Lithium, Natrium und Kalium, besonders bevorzugt Kalium, Erdalkali wie Magnesium, Calcium, Strontium und Barium, bevorzugt Magnesium und Calcium" besonders bevorzugt Magnesium, Seltenerden wie beispielsweise Scandium, Yttrium, Lanthan, Cer, Praseodym und Neodym, bevorzugt Scandium, Yttrium, Lanthan und Cer, besonders bevorzugt Lanthan und Cer oder deren Gemische.

Die Formkörper können anschließend bei Temperaturen von 100 bis 400°C, bevorzugt 100 bis 300°C beispielsweise unter einer Stickstoff-, Argon- oder Luftatmosphäre getrocknet und gegebenenfalls calciniert werden. Die Trocknung kann ein- oder mehrstufig bei unterschiedlichen Temperaturen durchgeführt werden. Bevorzugt wird die Trocknung zweistufig durchgeführt, beispielsweise werden die Formkörper zunächst bei 100 bis 150°C getrocknet und anschließend bei 200 bis 400°C calciniert.

Beim Einsatz von Rutheniumträgerkatalysatoren sollte der Sauerstoff bevorzugt in unterstöchimetrischen, stöchiometrischen oder geringfügig überstöchimetrischen Mengen und beim Einsatz von Kupferträgerkatalysatoren in einem stöchimetrischen Überschuss im Reaktor vorhanden sein.

Der Umsatz an Chlorwasserstoff im einfachen Durchgang kann auf 15 bis 90 %, bevorzugt 20 bis 80 %, besonders bevorzugt 25 bis 70 %, insbesondere 30 bis 60 % begrenzt werden. Im einfachen Durchgang durch den Reaktor nicht umgesetzter Chlorwasserstoff kann nach Abtrennung teilweise oder komplett in den Reaktionsteil zurückgeführt werden. Das Verhältnis von Chlorwasserstoff zu Sauerstoff (02) am Reaktoreintritt liegt in der Regel zwischen 1:1 und 20:1, bevorzugt 2:1 und 8:1, besonders bevorzugt 3:1 und 5:1.

Die sukzessive Katalysatordeaktivierung kann durch Erhöhung des zurückgeführten Chlorwasserstoffanteils (Erhöhung des Kreislaufverhältnisses) verringert werden (Katalysatorlaufzeitverlängerung).

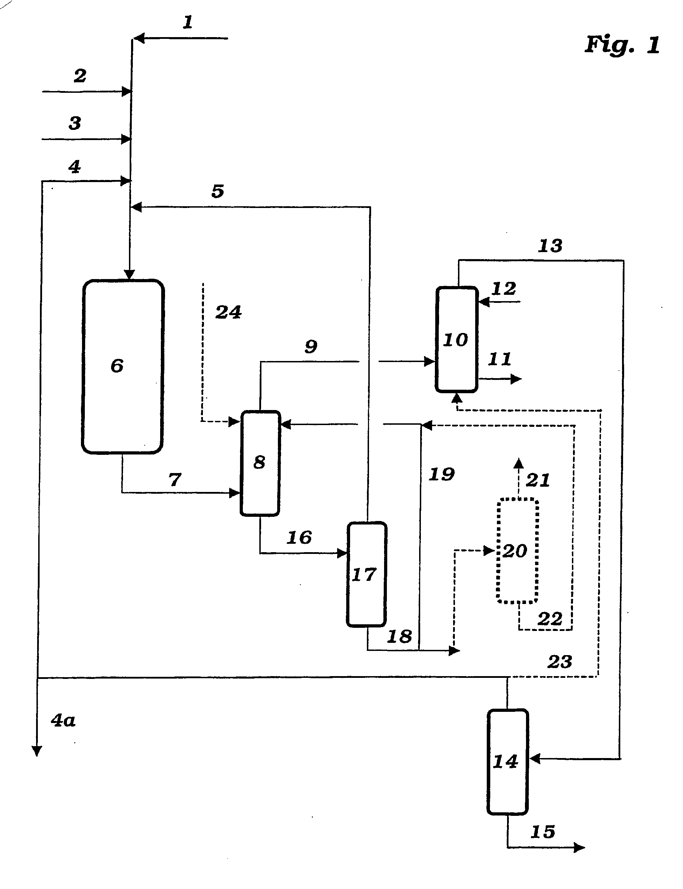

Ein beispielhafter Aufbau des erfindungsgemäßen Verfahrens ist in Fig. 1 gezeigt und in der nachfolgenden Legende beschrieben:

### Legende:

- 1.: Stickstoff. Nur zum Anfahren, Abfahren oder zum Inertisieren des Verfahrens
- 2.: Sauerstoff
- 3.: Chlorwasserstoff
- 4.: Kreisgas (im wesentlichen Sauerstoff)
- 4a.: Purgestrom aus dem Kreisgas
- 5.: Chlorwasserstoff
- 6.: Reaktor (vorzugsweise Rohrbündel ein oder mehrstufig, even- tuell auch mit Zwischeneinspeisung von Sauerstoff)
- 7.: Gasförmige Produktmischung (Im wesentlichen Chlor, Wasser- dampf, Sauerstoff und Chlorwasserstoff)
- 8.: Trennstufe zur Abtrennung von Chlorwasserstoff und Wasser nach beliebiger dem Fachmann geläufiger Methode (vorzugs- weise Waschturm, eventuell mit Kühler)
- 9.: Gewaschenes Produktgas (im wesentlichen Chlor, Sauerstoff, Restgehalt Wasser und eventuell geringe Mengen Chlorwaaser- stoff)
- 10.: Trocknung (vorzugsweise Trockenturm, eventuell mehrstufig und mit Wärmetauschern zur Kühlung)
- 11.: Verdünnte Schwefelsäure (kann optional nach Aufkonzentration in den Prozess zurückgeführt werden.)
- 12.: Konzentrierte Schwefelsäure
- 13.: Im wesentlichen Sauerstoff und Chlor
- 14.: Chlor-Kondensationstufe
- 15.: Chlor flüssig (optional zur weiteren Destillation)
- 16.: Salzsäure
- 17.: Salzsäuredestillation
- 18.: Verdünnte Salzsäure (Azeotropzusammensetzung)
- 19.: Verdünnte Salzsäure (Teilstrom)
- 20.: Optionale Tiefdruckdestillation der verdünnten Salzsäure
- 21.: Wasserdampf
- 22.: Verdünnte Salzsäure
- 23.: Teilstrom: Kreisgas (im wesentlichen Sauerstoff) zum Aus- treiben von Chlor aus der Schwefelsäure
- 24.: Optional: Wasser

## Patentansprüche

1. Verfahren zur kontinuierlichen Herstellung von Chlor durch Umsetzung von Chlorwasserstoff mit Sauerstoff in Gegenwart eines Heterogenkatalysators, **dadurch gekennzeichnet, dass** man den Umsatz von Chlorwasserstoff bei einfachem Reaktordurchgang auf 15 bis 90 % begrenzt, den nicht umgesetzten Chlorwasserstoff teilweise oder komplett zurückführt und den Anteil von zurückgeführtem Chlorwasserstoff während der Katalysatorlaufzeit sukzessive erhöht.

2. Verfahren zur kontinuierlichen Herstellung von Chlor nach Anspruch 1, **dadurch gekennzeichnet, dass** man den Chlorwasserstoff-Umsatz bei einfachem Durchgang auf 20 bis 80 % begrenzt.

3. Verfahren zur kontinuierlichen Herstellung von Chlor nach Anspruch 1, **dadurch gekennzeichnet, dass** man den Chlorwasserstoff-Umsatz bei einfachem Durchgang auf 25 bis 70 % begrenzt.

4. Verfahren zur kontinuierlichen Herstellung von Chlor nach Anspruch 1, **dadurch gekennzeichnet, dass** man den Chlorwasserstoff-Umsatz bei einfachem Durchgang auf 30 bis 60 % begrenzt.

5. Verfahren zur kontinuierlichen Herstellung von Chlor nach einem der Ansprüche 1 bis 4, **dadurch gekennzeichnet, dass** man als Heterogenkatalysator einen gegebenenfalls dotierten Rutheniumträgerkatalysator einsetzt.

6. Verfahren zur kontinuierlichen Herstellung von Chlor nach einem der Ansprüche 1 bis 5, **dadurch gekennzeichnet, dass** man die Umsetzung mit 2 bis 10 in Reihe geschalteten Reaktoren durchführt.

7. Verfahren zur kontinuierlichen Herstellung von Chlor nach Anspruch 6, **dadurch gekennzeichnet, dass** man die Sauerstoffzufuhr über mehrere Reaktoren verteilt.

## Claims

1. The process for the continuous preparation of chlorine by reaction of hydrogen chloride with oxygen in the presence of a heterogeneous catalyst, wherein the conversion of hydrogen chloride in a single pass through the reactor is restricted to from 15 to 90%, some or all of the unreacted hydrogen chloride is recirculated and the proportion of recirculated hydrogen chloride is gradually increased during the time of operation of the catalyst.

2. The process for the continuous preparation of chlorine according to claim 1, wherein the hydrogen chloride conversion in a single pass is restricted to from 20 to 80%.

3. The process for the continuous preparation of chlorine according to claim 1, wherein the hydrogen chloride conversion in a single pass is restricted to from 25 to 70%.

4. The process for the continuous preparation of chlorine according to claim 1, wherein the hydrogen chloride conversion in a single pass is restricted to from 30 to 60%.

5. The process for the continuous preparation of chlorine according to any of claims 1 to 4, wherein the heterogeneous catalyst used is a doped or undoped supported ruthenium catalyst.

6. The process for the continuous preparation of chlorine according to any of claims 1 to 5, wherein the reaction is carried out using from 2 to 10 reactors connected in series.

7. The process for the continuous preparation of chlorine according to claim 6, wherein the introduction of oxygen is divided over a plurality of reactors.

## Revendications

1. Procédé de fabrication continue de chlore par mise en réaction de chlorure d'hydrogène avec de l'oxygène en présence d'un catalyseur hétérogène, **caractérisé en ce que** la conversion du chlorure d'hydrogène lors d'un passage unique dans le réacteur est limitée à 15 à 90 %, le chlorure d'hydrogène non réagi est recyclé en partie ou en totalité, et la proportion de chlorure d'hydrogène recyclé augmente graduellement pendant la durée de vie du catalyseur.

2. Procédé de fabrication continue de chlore selon la revendication 1, **caractérisé en ce que** la conversion du chlorure d'hydrogène lors d'un passage unique est limitée à 20 à 80 %.

3. Procédé de fabrication continue de chlore selon la revendication 1, **caractérisé en ce que** la conversion du chlorure d'hydrogène lors d'un passage unique est limitée à 25 à 70 %.

4. Procédé de fabrication continue de chlore selon la revendication 1, **caractérisé en ce que** la conversion du chlorure d'hydrogène lors d'un passage unique est limitée à 30 à 60 %.

5. Procédé de fabrication continue de chlore selon l'une quelconque des revendications 1 à 4, **caractérisé en ce qu'**un catalyseur supporté à base de ruthénium éventuellement dopé est utilisé en tant que catalyseur hétérogène.

6. Procédé de fabrication continue de chlore selon l'une quelconque des revendications 1 à 5, **caractérisé en ce que** la réaction est réalisée avec 2 à 10 réacteurs connectés en série.

7. Procédé de fabrication continue de chlore selon la revendication 6, **caractérisé en ce que** l'alimentation d'oxygène est répartie sur plusieurs réacteurs.
